# EUROPEAN PATENT APPLICATION

(11) **EP 4 005 857 A1**
(43) Date of publication of application: **01.06.2022**
(21) Application number: 21210313.9
(22) Date of filing: 24.11.2021
(51) Int. Cl.: B60L 53/14, B60L 53/30, B60L 53/53

(54) **RECHARGING SYSTEM FOR ELECTRIC VEHICLE BATTERIES**

(30) Priority: 27.11.2020 IT 202000028718
(71) Applicant: Free2move Esolutions S.p.A., 20158 Milano (IT)
(72) Inventor: TODESCHINI, Marco, 23900 Lecco (IT); LAMBERTI, Francesco, 20161 Milano (IT); ROSATI, Daniele, 28069 Trecate (IT); CRUGNOLA, Giorgio, 21100 Varese (IT)
(74) Representative: Lunati & Mazzoni S.r.L.

(57) **Abstract**

It is provided a recharging system (1) for electric vehicle (10) batteries (EVB) comprising a recharging device (2) configured to be connected to an external electrical network (11), so as to be able to withdraw electricity from the same external electrical network (11), and to be connected to at least one first battery (EVB₁) of an electric vehicle to deliver or receive electricity respectively to or from the first battery (EVB₁) and including at least one storage apparatus (20 ) available in connection with the external electrical network (11) and/or the first battery (EVB₁) at least to receive electricity from the external electricity network (11) or from the first battery (EVB₁) and supply electricity to the first battery (EVB₁), in which the storage apparatus (20) comprises at least a second battery (EVB₂) of an electric vehicle, and in which the system (1) further comprises a flat platform (3) configured to be disposed on a ground and to allow the electric vehicle (10) to stop on the platform (3), and in which at least the second battery (EVB₂) is integrated into the platform (3) so as not to occupy further space in an area outside the platform (3).

## Description

The present invention relates to a recharging system for electric vehicle batteries of the type specified in the preamble of the first claim.

In particular, the present invention relates to a direct current fast recharging system, also known as DC fast-charging, suitable for allowing the rapid charging of batteries for electric vehicles, known as EVBs, or rather intended for the automotive sector.

A similar system is described in patent application US-A-2019/168630.

The charging columns for EVB batteries are currently known.

These charging stations are essentially divided into the fast type, with a power input between 50 kW and 100 kW, and ultra-fast, with a power input that can reach up to 500 kW.

Although now widely used, the previously mentioned recharging columns include some important drawbacks.

First of all, the cost of this technology is not yet competitive enough to push the market to turn towards electric vehicles.

Furthermore, a very important drawback is given by the fact that, in consideration of the supply power involved, it is substantially always necessary to provide for an upgrade of the electrical distribution network to which the column or columns are connected.

Obviously, the latter problem is of crucial importance especially in contexts such as residential districts or small businesses, whose availability is often limited to 50 kW. In order to obviate the aforementioned drawbacks, however, energy storage devices have been devised to facilitate the delivery of energy during the recharging phases.

In particular, systems are known which comprise a back-up battery capable of delivering the power required for fast recharging without having to carry out expensive, and sometimes impossible, upgrades of the network interconnection.

Basically, the system comprises a grid connection device equipped with an AC/DC converter, at least a stationary storage battery of a few tens of kWh and a device for connection to an EVB battery, equipped with a bidirectional static conversion device of the type DC/DC which allows the exchange of energy, to and from the vehicle and/or network, with different power limits.

The system therefore allows on the one hand to quickly recharge any type of electric vehicle by appropriately discharging the energy stored in the stationary battery housed in the system through the DC/DC converter and to be able to slowly and comfortably recharge the stationary battery when the vehicle is not present through the AC/DC converter.

Furthermore, since both the AC/DC converter and the DC/DC converter are bidirectional, it is possible to re-inject into the grid the energy stored in the stationary battery or in the vehicle battery, if present, both in the event of a blackout on the electricity grid, and to support the network with the provision of ancillary services in a market in which aggregators can rely on the energy resources distributed to optimize the cost of electricity for users.

However, this system of the known art also includes some important drawbacks.

In particular, the system described above is generally arranged in very bulky columns. In fact, the storage battery generally requires large housing spaces which lead to the adoption of substantially racks of mutually stacked batteries.

This means, therefore, that it is likely that the system with storage battery can hardly find use in domestic environments, especially indoors, for example inside a garage.

Furthermore, even outdoors, the waste of space intended for public use can be a significant obstacle to the spread of such columns.

A further development of storage battery systems is described in application US-A-2019168630.

Basically, the most relevant characteristic of the proposed system described in the document US-A-2019168630 is given by the fact that the system substantially provides an underground housing of the storage batteries and that the latter are organized in a plurality of substantially available plate-type battery holders side by side within the underground housing. In other words, the system just described provides for the construction of a horizontal rack of battery holders housed underground.

The system just described also includes some important drawbacks.

In particular, obviously, even if the system solves the encumbrance problem, the fact of having to create an underground housing implies that it is necessary to manipulate the ground or pavement on which the system is arranged.

Furthermore, the batteries are not quickly or easily accessible, but can only be handled by accessing the underground housing, or rather having to perform a plurality of maintenance actions.

In this situation, the technical task underlying the present invention is to devise a recharging system for electric vehicle batteries capable of substantially obviating at least part of the aforementioned drawbacks.

Within the scope of said technical task, an important object of the invention is to obtain a recharging system for electric vehicle batteries which allows to considerably reduce the overall dimensions, in particular avoiding wasting the space available to the consumer for the simple housing of one or more multiple system components.

Another important object of the invention is to provide a recharging system for electric vehicle batteries which allows to increase not only the speed of recharging, but also the speed of replacement of one or more components and, more generally, facilitate maintenance of the system itself.

The technical task and the specified aims are achieved by a recharging system for electric vehicle batteries as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:

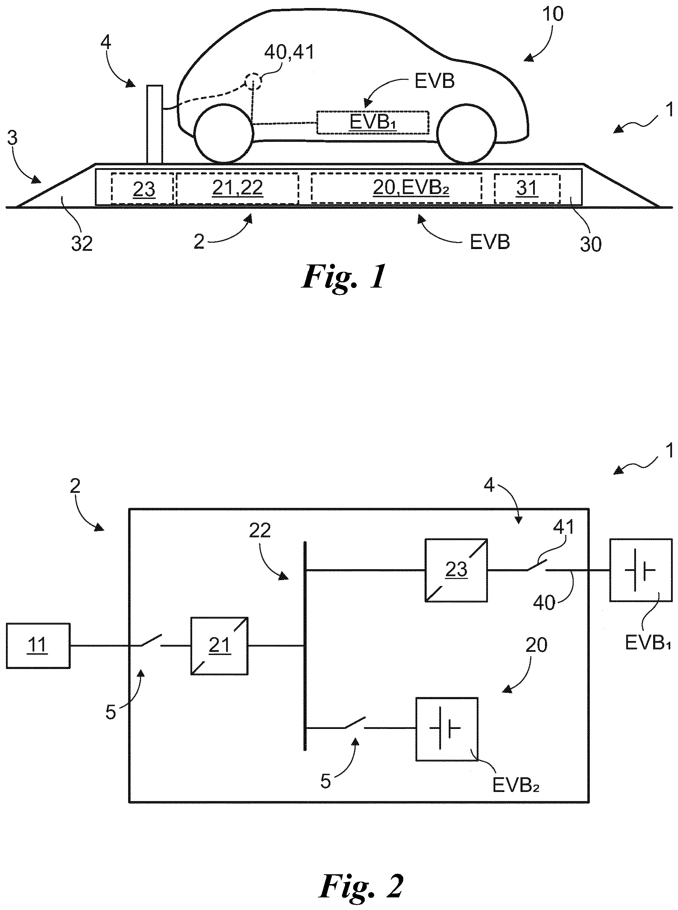

the **Fig. 1** shows a side view of a recharging system for electric vehicle batteries according to the invention on which parks an electric vehicle while being charged;
the **Fig. 2** illustrates a functional diagram of the recharging device of a charging system for electric vehicle batteries according to the invention;

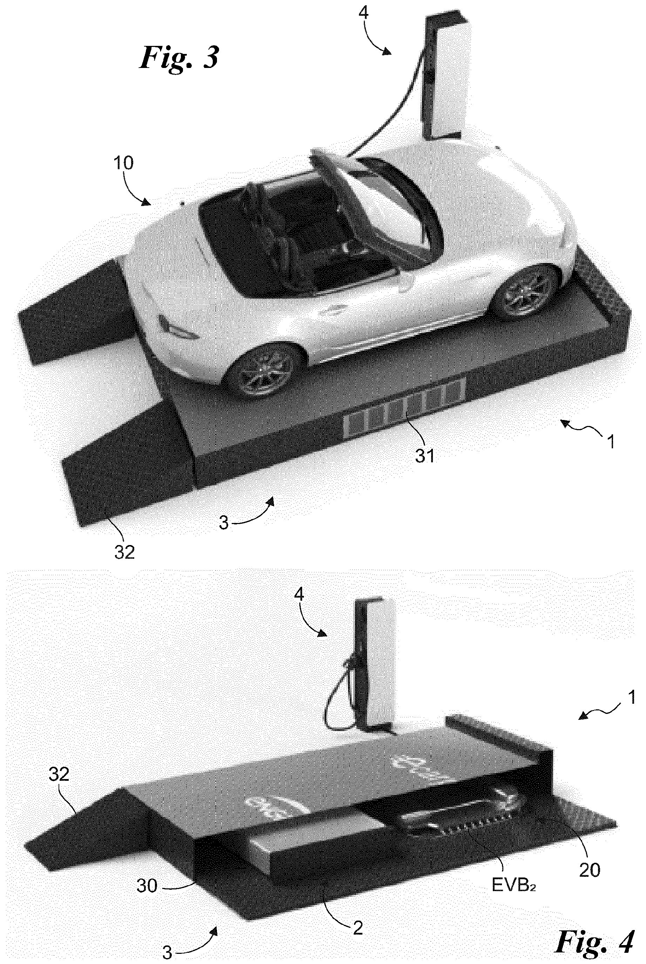

the **Fig. 3** is a perspective view of an embodiment of a charging system for electric vehicle batteries according to the invention in which the connection device is constituted by a column;
the **Fig. 4** is a sectional view along the longitudinal plane of the platform of the recharging system for electric vehicle batteries of Fig. 3; and

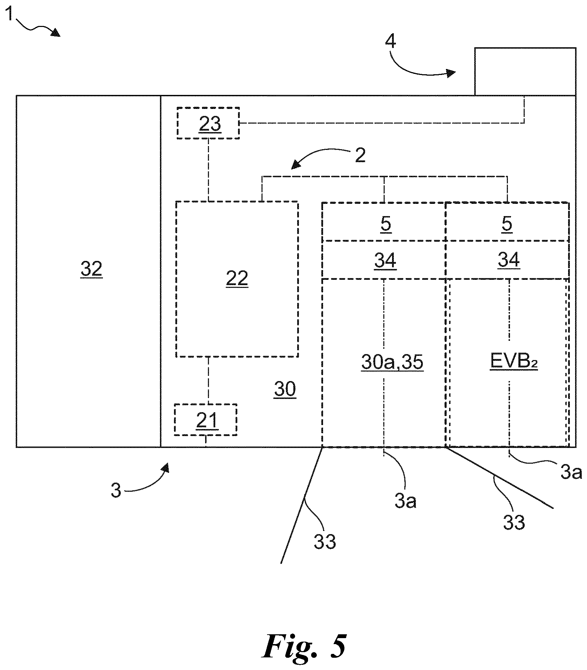

the **Fig. 5** shows a top view of a diagram of a charging system for electric vehicle batteries according to the invention in which are visible the interface means, the accesses and the guide means of the compartments present in the housing.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the recharging system for electric vehicle batteries according to the invention is globally indicated with the number **1.**

The system 1 is adapted to allow the recharging of electric energy for the operation of an electric vehicle **10.**

The electric vehicle 10 can be of any type. Of course, the electric vehicle 10 is also a hybrid vehicle including various possible power supplies, including fuel.

Essentially, the electric vehicle 10 comprises at least one battery **EVB** of electric vehicle.

EVB batteries are substantially particular electric batteries, also known by the term traction batteries, which differ from starter, lighting and ignition batteries because they are designed to supply energy for prolonged periods of time. Of course, EVB batteries are now extremely well known in the current state of the art.

The term EVB battery means, in the broad sense, both the entirety of a traditional battery for electric vehicle, but also a part of such a battery, for example a single module, which can autonomously act as a battery, or even a whole of batteries included in a battery pack.

In particular, preferably, the electric vehicle 10 comprises a first battery **EVB₁** of electric vehicle.

The first battery EVB₁ is basically an EVB battery. Therefore, it is a traction battery. Preferably, when reference is made to a traction battery it is meant that said battery is complete or whole.

The system 1, therefore, comprises a recharging device **2.**

The recharging device 2 is configured to recharge the first battery EVB₁ when connected to it, preferably after connection to the electric vehicle 10.

Naturally, the latter can comprise unions arranged on the body or hull and suitable for allowing the connection of the recharges 2 indirectly with the first battery EVB₁.

Therefore, the recharging device 2 is configured to be connected to the first battery EVB₁. In particular, the recharging device 2 is configured to deliver or receive electrical energy to or from the first battery EVB₁, respectively.

Furthermore, the recharging device 2 is configured to be connected to an external electrical network **11.**

The external electrical network 11 can be a domestic network or an industrial network. In any case, the external electrical network 11 is preferably adapted to supply, upon request, electrical energy in the form of alternating current AC.

The recharging device 2 is therefore configured to withdraw electrical energy from the external electrical network 11. The electrical energy thus drawn can, therefore, be made available to the first battery EVB₁ to recharge it.

The recharging device 2 also includes at least one storage apparatus **20.**

The storage apparatus 20 is substantially an energy accumulation element that is capable of allowing the storage of electrical energy in such a way as to be able to store it and use it when necessary or required.

The storage apparatus 20 is therefore preferably available in connection with the external electrical network 11. The storage apparatus 20 can define, inside the recharging device 2, at least one configuration in which it is connected to the external electrical network 11 and at least one configuration in which it is not connected to it. Furthermore, the storage apparatus 20 is preferably available in connection also, or alternatively, with the first battery EVB₁. Therefore, the storage apparatus 20 can define, inside the recharging device 2, also at least one configuration in which it is connected to the first battery EVB₁ and at least one configuration in which it is not connected to it.

In general, the storage apparatus 20 is adapted to receive electrical energy from the external electrical network 11, or even from the first battery EVB₁ itself, and to deliver electrical energy to the first battery EVB₁.

Advantageously, the storage apparatus 20 may not comprise a simple conventional battery.

The storage apparatus 20, in fact, preferably comprises at least a second battery **EVB₂** of an electric vehicle or a vehicle derivation.

The second battery EVB₂ is essentially an EVB battery as well. Therefore, in other words, it is a traction battery.

The second battery EVB₂, therefore, allows to carry out recharges of the first battery EVB₁, for example in fast or even ultra-fast recharge mode.

Naturally, the storage device and, therefore, the second EVBbattery₂ are configured to accumulate energy, over time, especially from the external electrical network 11.

Furthermore, preferably but not necessarily, the second battery EVB₂ is of the same type as the first battery. EVB₁. In particular, the second battery EVB₂ can be of the SLB type, or *second-life battery.*

Even more in detail, the second battery EVB₂ can have the same capacity as the first battery EVB₁.

Alternatively, the second battery EVB₂ can be suitably sized with respect to EVB₁ in such a way as to be capable of delivering considerable performance, in terms of recharging speed.

The advantage of including a second battery EVB₂ is to have a configuration, by its nature, horizontally developed with a sturdy, safe and resistant packaging.

Furthermore, it is possible to supply the recharging device 2 with a second battery EVB₂ which can be substantially made with one or more used EVB batteries, second-hand or not.

Even more in detail, the recharging device 2 can include a first converter 21.

The first converter 21 is preferably operatively connected to the external electrical network 11. In particular, preferably, the first converter 21 is substantially configured to convert the alternating current signal into direct current and vice versa. Therefore, the first converter 21 is essentially a bidirectional static AC/DC converter.

In addition, the recharging device 2 comprises a distribution device **22.**

The distribution device 22 is preferably operatively connected to the first converter 21. Furthermore, the distribution device 22 is configured to route electrical energy in input from the first converter 21 to the storage apparatus 20 and/or to the first battery EVB₁.

Therefore, the distribution device 22 can be, for example, a DC-Bus configured to route the direct current signal from the first converter 21 to at least one of the storage apparatus 20 and/or to the first battery EVB₁.

Preferably, the recharging device 2 also comprises a second converter **23.** The second converter 23 is preferably operatively connected between the distribution device 22 and the first battery EVB₁. The second converter 23 is therefore preferably adapted to modulate the signal distributed by the distribution device 22 to the user, that is to the first battery EVB₁.

The second converter 23 can therefore, for example, consist of a DC-DC converter which to modulate in voltage the direct current signal coming from the first converter 21 through the distribution device 22.

Naturally, the system 1 can also include further elements.

For example, the system 1 can include selection means **5.**

If present, the selection means 5 are configured to selectively connect or disconnect from the converter 23 the external electrical network 11 or the storage apparatus 20. In particular, the selection means 5 can allow to control the operating modes of the system 1 even when charging the first battery EVB₁.

Therefore, for example, through the selection means 5 it is possible to force the system 1 to discharge only the second battery EVB₂ in the first battery EVB₁, or it is also possible to disconnect the second battery EVB₂ and allow only the external electrical network 11 to charge the first battery EVB₁. Of course, the charge can also be carried out simultaneously from an external electrical network 11 and a second battery EVB₂.

The selection means 5 can therefore include for example switches arranged along the connection between the external electrical network 11 and the first converter 21 and/or between the distribution device 22 and the storage device.

The selection means 5 can also be controlled from the outside by a user or can also be managed by an automatic control system.

The system 1, moreover, preferably comprises a platform **3.**

The platform 3 is advantageously suitable for vehicles. Furthermore, it is flat and configured to be placed on a ground. The ground, of course, can be a pavement, for example of a garage, or also a road pavement, for example a surface inside a parking lot.

The platform 3 is therefore preferably configured to allow the electric vehicle 10 to rest on the platform 3 itself.

Therefore, the platform 3 can comprise at least one ramp **32.**

The ramp 32 is preferably configured to allow the electric vehicle 10 to rise from the ground to the level of the platform 3.

Naturally, the platform 3 can comprise a single ramp 32, or two ramps 32 arranged at opposite ends of the platform 3 itself to allow an electric vehicle 10 to get on and off the platform 3 following only one direction of transit.

Advantageously, the platform 3 includes the bulkier elements of the system 1.

In particular, preferably, at least the second battery EVB₂ is integrated within the platform 3 in such a way as not to occupy further space in an environment external to the platform 3 itself.

Furthermore, the platform 3 defines a housing **30.**

The housing 30 is substantially determined by the space between the plane of the platform 3 and the ground. Furthermore, the housing 30 is the part inside which at least a second battery EVB₂ is arranged.

Naturally, several second batteries EVB₂ could be arranged inside the housing 30. Even more preferably, the housing 30 is adapted to entirely contain the recharging device 2.

The housing 30 can comprise one or more compartments **30a.**

The compartments 30a are substantially containers or delimited spaces present inside the housing 30. Therefore, the compartments 30a are preferably separated from the rest of the housing 30 preferably by walls.

In particular, each compartment 30a is configured to house the second battery EVB₂.

Preferably, the platform 3 comprises at least one access **33.** If present, the access 33 allows access to the housing 30, preferably inside a respective compartment 30a, and therefore to one or more second batteries EVB₂, from the outside of the platform 3.

Therefore, the access 33 can be made as a simple opening, or more preferably an opening provided with a door that can be opened, for example by sliding or rotating or otherwise.

Furthermore, preferably, the compartment 30a also comprises interface means **34.** The interface means 34 are substantially configured to be operably in a resolvable way connected to the second battery EVB₂.

Furthermore, they are housed within the compartment 30a, for example in correspondence with a bottom wall, or end of stroke inside it. Therefore, the interface means 34 are preferably operationally connected at least to the first converter 21. More in detail, if the selection means 5 are present, the interface means are operationally connected to the selection means 5 and to the first converter 21 by means of the means. selection.

Therefore, the interface means 34 are preferably operationally connected, directly or indirectly, to the first converter 21.

In general, the interface means comprise connection elements, for example electrical, hydraulic and mechanical parts, suitable for allowing the complete connection of the second battery EVB₂ to the interface means 34 when the second battery EVB₂ is positioned within the compartment 30a. Preferably, the interface means 34 have resolvable interlocking connection elements.

Therefore, in addition, preferably the compartment 30a also comprises guide means **35.**

The guide means 35 are substantially configured to guide the introduction of a second battery EVB₂ into the compartment 30a in a predetermined direction **3a** so that the second battery EVB₂ engages with the interface means 34 when it reaches a predetermined position, for example end-of-stroke, within compartment 30a.

Therefore, the guide means 35 can comprise a carriage movable along the predetermined direction 3a and adapted to accompany the second battery EVB₂ in input and or output from or to the access 33. Or, the guide means 35 may comprise a track on the which the second battery EVB₂ can translate along the predetermined direction 3a.

Naturally, the guide means 35 could coincide with the side walls, or develop around the predetermined direction 3a, of the compartment 30a in the sense that the latter, if correctly sized, could in itself guide the insertion of the second battery EVB₂ from the access 33 up to the interface means 34.

The platform 3, in addition, can also include at least one cooling unit **31.**

The cooling unit 31 is preferably configured to circulate air within the platform 3 so as to cool at least the second battery EVB₂.

Naturally, therefore, the platform 3 can include one or more wall gratings suitable for allowing hot air to be expelled and cold air to be extracted from the outside.

In conclusion, the system 1 can comprise a connection device **4.**

The connection device 4 is preferably external to the platform 3. Furthermore, it is configured to allow the connection, on command, between the recharging device 2 and the electric vehicle 10.

In particular, the connection device 4 is configured for allowing the first battery EVB₁ to be operatively connected to the recharging device 2.

The connecting device 4 preferably comprises a connector **40.**

The connector 40 is preferably configured to connect the second converter 23 to the first battery EVB₁.

The connector 40 can therefore be presented as a simple cable, possibly equipped with a plug to be inserted into the charging socket of the electric vehicle 10. Or, the connector 40 can include a column operatively connected to the second converter 23 from which a plug emerges.

The connection device 4, therefore, can also comprise control means **41.**

If present, the control means 41 are configured to allow to control the delivery of electrical energy from the second converter 23 to the first battery EVB₁.

The control means 41 can therefore include a switch that can be controlled manually by a user or by an automatic control system, similarly to what is described for the selection means5.

The control means 41 can therefore be arranged on the connector 40 , possibly on the plug or also on the column in such a way as to allow to control the recharging of the first battery EVB₁, or of the electric vehicle 10.

The operation of the recharging system for electric vehicle batteries 1 previously described in structural terms is substantially similar to the operation of any recharging system which includes internal storage means, or an auxiliary battery in which to charge or to discharge electrical energy on command.

The recharging system for electric vehicle batteries 1 according to the invention achieves important advantages.

In fact, the recharging system 1 for electric vehicle batteries allows to increase not only the speed of recharging, but also the speed of replacing one or more components and, more generally, facilitate maintenance of the system itself.

In detail, the fact of using EVB batteries inside the storage device 20 makes it possible to efficiently use used or second-hand EVB batteries, such as SLBs for example.

The system 1 of this type is particularly suitable for implementing DC-fast charging and DC-ultra-fast charging systems.

Furthermore, the recharging system 1 for electric vehicle batteries makes it possible to considerably reduce the overall dimensions, in particular avoiding wasting the space available to the consumer as it is preferably integrated into the valley 3.

The addition of accesses, interface means and driving means it increases the speed of replacement of the EVB batteries of the storage system, guaranteeing very reduced maintenance and restoration times.

The invention is susceptible of variants falling within the scope of the inventive concept defined by the claims.

In this context, all the details can be replaced by equivalent elements and the materials, shapes and dimensions can be any.

## Claims

1. Recharging system (1) for electric vehicle (10) batteries (EVB) comprising a recharging device (2) configured to be connected to an external electrical network (11), in such a way as to be able to withdraw electricity from said external electrical network (11), and to be connected to at least a first battery (EVB₁) of an electric vehicle to deliver or receive electrical energy respectively to or from said first battery (EVB₁) and including at least one storage apparatus (20) available in connection with said external electrical network (11) and/or said first battery (EVB₁) at least to receive electrical energy from said external electrical network (11) or said first battery (EVB₁) and supply electrical energy to said first battery (EVB₁),
and **characterized by** that
- said storage apparatus (20) comprises at least a second battery (EVB₂) of an electric vehicle; and
- said system (1) further comprising a flat vehicular platform (3) configured to be arranged on a ground and to allow said electric vehicle (10) to park on said platform (3), and wherein at least said second battery (EVB₂) is integrated within said platform (3) so as not to occupy further space in an environment outside said platform (3).

2. System (1) according to claim 1, wherein said platform (3) defines a housing (30) capable of containing entirely said recharging device (2).

3. System (1) according to any one of the preceding claims, wherein said platform (3) comprises a cooling unit (31) configured to put an air circulating within said platform (3) so as to refrigerate at least said second battery (EVB₂).

4. System (1) according to any one of the preceding claims, wherein said platform (3) comprises at least one ramp (32) configured to allow said electric vehicle (10) to go up from said ground to said platform (3) floor.

5. System (1) according to claim 1, wherein said second battery (EVB₂) is of the same type with respect to said first battery (EVB1).

6. System (1) according to any one of the preceding claims, wherein said recharging device (2) comprises a first converter (21) operatively connected to said external electrical network (11), a distribution device (22) operatively connected to said first converter (21) is configured to route electrical energy in input from said first converter (21) to said storage apparatus (20) and/or said first battery (EVB₁), and a second converter (23) operatively connected between said distribution device (22) and said first battery (EVB₁).

7. System (1) according to any one of the preceding claims, comprising an external connection device (4) to said platform (3) and configured to allow the connection, on command, between said charging device (2) and said electric vehicle (10) so as to allow to operatively connect said first battery (EVB₁) to said recharging device (2).

8. System (1) according to claims 6-7, wherein said connecting device (4) comprises a connector (40) configured to connect said second converter (23) and said first battery (EVB₁) of said electric vehicle (10) and control means (41) configured to allow to control the supply of electric energy from said second converter (23) to said first battery (EVB₁).

9. System (1) according to at least claim 6, comprising selection means (5) configured to allow to selectively connect or disconnect from said second converter (23) said external electrical network (11) or said storage apparatus (20) during the recharging of said first battery (EVB₁).

10. Recharging method of an electric vehicle (10) including a first battery (EVB₁) realized by a system (1) according to any one of the preceding claims.

11. System (1) according to at least claim 10, wherein said compartment (30a) comprising interface means (34) operatively connected, directly or indirectly, to said first converter (21) and configured to be operatively connected in a resolvable way to said second battery (EVB₂).

12. System (1) according to at least claim 10, wherein said compartment (30a) comprising guide means (35) configured to guide the introduction of said second battery (EVB₂) within said compartment (30a) in a predetermined direction (3a) so that said second battery (EVB₂) clasps onto said interface means (34) when it reaches a predetermined position, for example end-of-stroke, within said compartment (30a).

13. Use of a system (1) according to any one of the preceding claims for charging an electric vehicle (10) including a first battery (EVB1).
